# EUROPEAN PATENT APPLICATION

(11) **EP 2 518 183 A2**
(43) Date of publication of application: **31.10.2012**
(21) Application number: 10839694.6
(22) Date of filing: 07.12.2010
(51) Int. Cl.: C23C 28/00, C09D 5/10, C09D 5/24, C23C 22/32

(54) **RESIN COMPOSITION FOR PRE-COATED STEEL SHEET HAVING EXCELLENT WELDING PROPERTIES, WORKABILITY AND CORROSION RESISTANCE, AND A PRODUCTION METHOD FOR PRE-COATED STEEL SHEET AND STEEL SHEET USING THE SAME**

(30) Priority: 23.12.2009 KR 20090130268
(71) Applicant: POSCO, Nam-gu Pohang-si, Gyeongsangbuk-do 790-300 (KR)
(72) Inventor: JUNG, Jin Ho, Gwangyang-si Jeollanam-do 545-786 (KR); BAEK, Je Hoon, Gwangju 500-795 (KR); OH, Jong Gi, Gwangyang-si Jeollanam-do 545-764 (KR); JUNG, Yong Gyun, Gwangyang-si Jeollanam-do 545-761 (KR)
(74) Representative: Held, Stephan
(86) International application number: PCT/KR2010/008713
(87) International publication number: WO 2011/078497

(57) **Abstract**

A resin composition for a pre-coated steel sheet having excellent welding properties, corrosion resistance and workability, a method of producing a pre-coated steel sheet using the same, and a pre-coated steel sheet are provided. More particularly, a metal resin composition for coating a film is provided. The composition includes a subject resin, a curing agent, and at least one kind of metal powder selected from the group consisting of Ni, Co, Mn, Fe, Ti, Cu, Al, Zn, Sn and Fe₂P powder, and has an average short-axis diameter (Φ) satisfying the condition t/3≤Φ≤3t (where t is a thickness of a dried coating film formed by coating a resin metal composition for coating the coating film). Therefore, the steel sheet to which the metal resin composition is coated has excellent welding properties, corrosion resistance and workability.

## Description

### CROSS-REFERENCE TO RELATED APPLICATION

This application claims priority to and the benefit of Korean Patent Application No. 2009-0130268, filed December 23, 2009, the disclosure of which is incorporated herein by reference in its entirety.

### BACKGROUND

### 1. Field of the Invention

The present invention relates to a resin composition for a pre-coated steel sheet having excellent welding property, corrosion resistance and workability, a method of producing a pre-coated steel sheet using the same, and a pre-coated steel sheet.

### 2. Discussion of Related Art

A cold-rolled steel sheet produced in an iron and steel company is generally used as a material for the body or parts of a car, electric appliances or construction material, and particularly, in an auto parts company, auto parts are produced by processing a cold-rolled steel sheet into a desired shape and performing chromate coating. However, due to the environmental regulations on chromate coating, a chromium-free solution is used as an alternative, and coating using an expensive chromium-free solution causes an increase in production cost. Accordingly, as the iron and steel company provides a pre-coated steel sheet to the auto part company, loss of paint occurring in the individual coating on the parts after molding may decrease.

A steel sheet that has already been coated, also known as a pre-coated steel sheet, is a product coating a resin on a zinc-, zinc alloy-, aluminum-, aluminum alloy-, or tin alloy-plated steel sheet. This product has been developed, however, it is impossible to use in resistance welding due to a low electrical conduction property of the resin, or it is difficult to apply the product to a part that requires welding due to the very short lifespan of an electrode. For these reasons, there is a demand for developing a weldable pre-coated steel sheet that is painted in advance and has excellent welding property, workability and corrosion resistance.

After the deep drawing, corrosion resistance of a resin-coated steel sheet containing a large amount of metal powder such as Zn, A1 or Cu powder needs to be ensured since the metal powder is detached and the resin is scratched during the deep drawing. The metal powder and the resin around the metal powder coating the pre-coated steel sheet are easily detached during the deep drawing. Corrosion factors such as water, oxygen, salt and sulfurous acid gas easily penetrate into a part from which the metal powder and the resin are detached, and thus a basic material layer of the steel sheet and a plated layer of a plated steel sheet are easily corroded. Moreover, during the deep drawing, the metal powder and the resin detached from the resin-coated steel sheet are fixed on a mold, scratching the surface of the resin-coated steel sheet during continuous molding of the parts, and thus, the exterior of the molded parts does not look pleasing to the eye. In addition, the parts requiring high level of safety can become more vulnerable to corrosion.

Largely, according to the prior art, a resin composition containing metal powder was added (i) as a pigment to give a metal texture , (ii) to improve corrosion resistance by adding a metal powder capable of a sacrificial method with Zn and A1 powder in the resin layer, (iii) and as a conductor to enhance electrical conductivity and resistance welding properties. The object is to inhibit electrical conductivity as much as possible when metal powder is added to give a metal texture or metal powder is added to be used for a sacrificial method in order to improve the corrosion resistance, and it is different from metal powder being used for parts that need welding by enhancing the electrical conductivity or resistance welding property.

To solve the low electrical conductivity and welding property of the resin-coated steel sheet, Korean Patent Publication No. 2002-0039568 (Application No. 2000-0069474) discloses a resin-coated steel sheet for a fuel tank capable of welding. While welding properties and solution stability increased by using a water-soluble phenoxy-based resin solution containing flat-type metal powder having a rectangular length of 0.1 to 3.0 µm. However, there is no comment on ensuring corrosion resistance under the continuous deep drawing, and contents of a non-metal solid and a metal powder, and the relationship between a particle size of the metal powder and the thickness of a coating film are not clearly recorded.

Meanwhile, Korean Patent Publication No. 2008-0063171 (Application No. 2007-0139436) discloses a low-temperature curable chromium-free pre-treated layer containing a conductive polymer, but it is different from the present invention in that the above-mentioned patent is limited to a pre-treated layer and does not use a metal powder.

### SUMMARY OF THE INVENTION

To give resistance welding property to a resin containing a non-conducive polymer resin, a curing agent, a lubricant or an inorganic additive, it is necessary to contain a metal powder having electrical conductivity. The large amount of metal power contained in a metal resin composition coating a steel sheet is easily detached from the surface of the steel sheet because the metal powder cannot tolerate the frictional force between a mold and the steel sheet during the deep drawing. The detached metal powder and fractions of the resin coating film are easily fixed on the surface of the mold, thereby causing resin scratching on the surface of a part during a continuous molding process of the part. Corrosion factors such as water, oxygen, salt, sulfurous acid gas, etc. are easily penetrated into parts from which the resin is detached or scratched during the molding, thereby causing corrosion in the base iron or the plated layer of the steel sheet, and hence decreasing the safety of the part.

Meanwhile, when the metal powder is made fine, or the content of the metal powder is decreased to a minimum level to enhance corrosion resistance of the pre-coated steel sheet, a current may not flow smoothly during resistance welding when a large amount of instant current should flow between the two steel sheets in contact with each other. Therefore, welding may not be performed well, or a welding rod may be damaged during a continuous molding process.

### MEANS OF SOLVING PROBLEMS

The present invention is directed to providing a metal resin composition for coating a pre-coated steel sheet having excellent welding property, workability and corrosion resistance, and a pre-coated steel sheet obtained therefrom. In the present invention, the optimized relation between a content of metal powder in the metal resin composition, an average particle size of the metal powder, and a thickness of a dried coating film after application is set to simultaneously ensure welding properties, workability and corrosion resistance.
More specifically, the present invention relates to a pre-coated steel sheet having excellent welding properties, corrosion resistance and workability, which is coated with a metal resin composition including a subject resin, a curing agent and at least one kind of metal powder selected from the group consisting of Ni, Co, Mn, Fe, Ti, Cu, Al, Zn, Sn and Fe₂P powder, and satisfying the condition in that an average short-axis diameter (Φ) of the metal powder is t/3≤Φ≤3t (where t is a thickness of a coating film formed by coating the resin composition and curing the composition).

### DETAILED DESCRIPTION OF EXEMPLARY EMBODIMENTS

Hereinafter, exemplary embodiments of the present invention will be described in detail. However, the present invention is not limited to the embodiments disclosed below, but can be implemented in various forms. The following embodiments are described in order to enable those of ordinary skill in the art to embody and practice the present invention.

Although the terms first, second, etc. may be used to describe various elements, these elements are not limited by these terms. These terms are only used to distinguish one element from another. For example, a first element could be termed a second element, and, similarly, a second element could be termed a first element, without departing from the scope of the exemplary embodiments. The term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

The terminology used herein is for the purpose of describing particular embodiments only and is not intended to be limiting of the exemplary embodiments. The singular forms "a," "an" and "the" are intended to include the plural forms as well, unless the context clearly indicates otherwise. It will be further understood that the terms "comprises," "comprising," "includes" and/or "including," when used herein, specify the presence of stated the features, integers, steps, operations, elements, components and/or groups thereof, but do not preclude the presence or addition of one or more other features, integers, steps, operations, elements, components and/or groups thereof.

With reference to the appended drawings, the exemplary embodiments of the present invention will be described in detail below. To aid in understanding the present invention, like numbers refer to like elements throughout the description of the figures, and the description of the same elements will not be reiterated.

The present invention relates to a metal resin composition including a subject resin, a curing agent and at least one kind of single metal powder or alloy powder selected from the group consisting of Ni, Co, Mn, Fe, Ti, Cu, Al, Zn, Sn and Fe₂P powder. Here, the thickness of a coating film after drying may satisfy the condition in that an average short-axis diameter (Φ) of the metal powder or alloy powder is t/3≤Φ≤3t (where t is a thickness of a coating film formed by coating the resin metal composition for coating a coating film and drying the layer) according to the average diameter of the metal powder contained in the metal resin composition. More specifically, the thickness of the coating film and the average diameter of the metal powder may be selected to satisfy the condition t/2≤Φ≤2t.

When the average diameter of the metal powder of the dried coating film is smaller than 1/3 of the thickness of the coating film, a pathway enabling electrical conduction may not be generated, so it may be impossible to perform resistance welding since the particles in the metal powder connect to each other. When the average diameter of the metal powder is three times larger than the thickness of the coating film, the metal powder may be exposed to an outside of the dried coating film causing the surface of the coating film may become rough and the metal powder may be detached in the deep drawing, thereby contaminating the mold and causing scratching on the surface of a part.

In the present invention, it is preferable that the composition containing the subject resin, the curing agent and the inorganic additive is diluted in a suitable organic solvent according to viscosity, and then coated and dried on a steel sheet.

In the present invention, the single metal powder or alloy powder thereof is included at 2 to 30 v/v% of the dried coating film. That is, in the composition of the present invention, at least one kind of single metal powder or alloy powder selected from the group consisting of Ni, Co, Mn, Fe, Ti, Cu, Al, Zn, Sn and Fe₂P powder may be dispersed in a non-electrical conductive resin containing a subject resin, a curing agent and an inorganic additive to be contained at approximately 2 to 30 v/v% of the total volume of the coating film in the film after drying.

The volume ratio of the metal powder in the dried coating film is the volume ratio of a conductor to a non-conductor in the coating film, which is an important factor in determining electric conductivity of the coating film. Unlike other metals Al has a low specific gravity, and Ni and Cu have high specific gravities, so the volume ratio of the metal in the dried coating film formed by mixing the same amount of a non-metal resin composition and a metal powder is lower as the metal has a larger specific gravity. Therefore, when resistance welding is performed after the steel sheets coated with a metal resin composition containing a metal having high specific gravity are in contact with each other, the pathway through which a current flows is shortened, which is disadvantageous to resistance welding. Accordingly, it is necessary to control the volume of the non-conductive resin composition and the volume of the conductive metal powder in the dried coating film to produce a pre-coated steel sheet having excellent welding properties. It is preferable that the volume ratio of the metal powder in the coating film after drying is adjusted to be 2 to 30 v/v%. More specifically, the volume of the metal powder in the dried coating film may be adjusted to be 5 to 20 v/v%.

When the ratio of the metal powder is smaller than 2 v/v%, there is a concern that welding may be impossible since a sufficient pathway for electric conductivity may not be provided during resistance welding when a large amount of instant current should flow. Meanwhile, when the metal powder is contained at more than 30 v/v%, the coating film will peel when the coated steel sheet is deep-drawn or the metal powder will detach and fix on a mold. Therefore, the exterior of the molded part may not look pleasing to the eye during continuous molding, and corrosion resistance may be drastically degraded in the peeled or scratched part of the coating film, thereby easily causing corrosion.

In the present invention, the metal powder or alloy powder having an average diameter of 0.1 to 100 µm, more particularly 0.3 to 60 µm may be used. When the average diameter of the metal powder or alloy powder is less than 0. 1 µm, it may be impossible to perform welding since the particles of the metal powder are in direct contact with each other and it may be difficult to form a pathway for electricity to pass through the coating film. When the average diameter is more than 100 µm, scratches may occur on the surface of the resin even though a small amount of metal powder may be detached during processing, and it may be difficult to perform uniform coating since it is difficult to maintain dispersion in the solution for a long time.

Though the thickness of the coating film and the average diameter of the metal powder are adjusted as described above, it is preferable to have the thickness of the coating film to be 1 to 20 µm for welding, and more preferable to have the thickness of the coating film after drying to be 2 to 15 µm.

When the thickness of the dried coating film is less than 1 µm, resistance welding may possibly be performed with a high voltage, even though the metal powder is not mixed, due to the roughness of the surface of the steel sheet generally used. However, when the metal resin composition containing metal powder is applied, corrosion resistance is considerably degraded even though the composition is not molded into parts by the deep drawing, thereby causing corrosion. Meanwhile, when the thickness of the dried coating film is more than 20 µm, resistance welding is possible at a very high voltage and there is a concern that the lifespan of the electrode may become very short in the resistance welding even though the metal powder is mixed under the above-mentioned conditions,. In addition, since a coarse metal powder having a diameter of 7 to 60 µm should be used, the resin may be severely scratched during continuous work and an obvious color difference between a deep-drawn region and a non-processed region can occur even if a small amount of the metal powder and the resin are detached from a mold and fixed during the deep drawing.

Although the same amount of metal powder is contained in the resin coating film, the welding property may vary according to the shape of the metal powder. When the metal powder is mixed with the resin composition in the preparation of the metal resin composition, the mixture is stirred using an impeller rotating at high speed, or the mixture is given a mechanical impact using a bead mill for uniform dispersion. The former does not change the shape of the metal powder significantly, but is difficult to disperse the particles uniformly. However, the latter can disperse particles uniformly depending on the operating conditions of the bead mill, but may cause a change in the shape of the base material, the metal powder. The shape of the base material, the metal powder, may be spherical, oval, angular, wedge-shaped or a combination thereof. When the metal powder is dispersed by a mechanical impact, particles may be changed into a flat shape. Moreover, Al or Zn powder for paint used to materialize the metal texture may be provided in a flat shape by rolling the powder in the production process in advance.

To form a steel sheet having excellent welding property of the present invention, an average length ratio of a short axis to a long axis of the metal powder contained in the metal resin composition before being coated on the steel sheet may be 1:1 to 10, and more particularly 1:1 to 5.

In a coating film obtained by applying and then drying a metal resin composition containing 2 to 30 v/v% of flat- or needle-shaped metal powder having an average length ratio of a short axis to a long axis greater than 1:10, the metal resin composition may stack with each other making it difficult to form a pathway capable of passing a current therethrough or to pass a large amount of current sufficient to be used in welding. Particularly, a composition containing needle-shaped metal powder may be difficult to use for welding since the metal powder contained in the coating film is dissolved before the base iron is welded when a sufficiently large amount of current is passed, and it may also be difficult to be coated uniformly due to an increase in viscosity of the composition. Meanwhile, the metal powder having a bump or wedge shape attached on a spherical surface thereof may have a large surface area capable of binding to a resin layer, may reduce the amount detached from the coating film when a pre-coated steel sheet is formed by dispersing and applying the metal powder in the resin composition during deep drawing due to an anchoring effect of the resin, and may possibly be used in resistance welding since a current sufficient for welding may flow.

To increase adhesion between the metal powder and the resin in the dried coating film, a silane coupling agent can be used to treat the metal powder before mixing with the resin composition, or 0.1 to 10 parts by weight of the silane coupling agent, based on 100 parts by weight of the subject resin, may be mixed in the resin composition in advance to disperse the metal powder.

The present invention also relates to a pre-coated steel sheet to which the resin metal composition is applied. The pre-coated steel sheet is pre-treated by chromate treatment, chromium-free coating film treatment, SiOx layer treatment or phosphate treatment to have an attached amount after cleaning of 10 to 2,000 mg/m². In the present invention, the thickness of the coating film formed by applying and drying the resin metal composition for coating the pre-coated steel sheet, including the thickness of the pre-treated layer, is 1 to 20 µm.

In the present invention, the silane coupling agent is added to make the bond between the metal powder and the resin or between the surface of the steel sheet or the plated layer and the resin harder. When the silane coupling agent is mixed with the resin composition in advance to disperse the metal powder at an amount less than 0.1 parts by weight based on 100 parts by weight of the subject resin, the silane coupling agent may not have a great influence on the bond between the metal powder and the resin. In addition, when the silane coupling agent is added at an amount more than 10 parts by weight, the silane coupling agent is dispersed non-uniformly in the resin composition, thereby reducing corrosion resistance or the dispersing property.

In the present invention, examples of the subject resin may include, but are not limited to, an epoxy resin, a phenoxy resin, and a polyester resin. Here, the epoxy and phenoxy resins may have a number average molecular weight of 3,000 to 10,000, and the polyester resin may have a number average molecular weight of 5,000 to 30,000. The subject resin may be one or a mixture of at least two of the above-mentioned resins.

The subject resin may be dispersed in an organic solvent. As the organic solvent, alcohol, ketone, ether, an aromatic compound, an aliphatic hydrocarbon or amine may be used, and specifically, propylene glycol methyl ether may be used. The epoxy resin or phenoxy resin used as the subject resin increases in hydrophobicity as the molecular weight thereof increases. It is preferable to use an organic solvent having a reactive group to dissolve the hydrophobic subject resin.

In the present invention, examples of the curing agent may include, but are not limited to, melamine or a blocked polyisocyanate in which a terminal end is capped. As the curing agent, one or a mixture of at least two of the above-mentioned curing agents may be used.

In the present invention, examples of the silane coupling agent may include, but are not limited to, epoxy silane-based coupling agents, for example, 3-aminopropyltriepoxysilane, 3-glycidoxypropyltrimethoxysilane, 3-methacryloxypropyltrimethoxysilane, N-(β-aminoethyl)-γ-aminopropyltrimethoxysilane, γ-glycidoxypropyltriethoxysilane and γ-glycidoxytrimethyldimethoxysilane. The coupling agent may use one or a mixture of at least two thereof.

Hereinafter, the present invention will be described in further detail with respect to the following examples, but is not limited thereto.

<Example 1>

An epoxy resin and a phenoxy resin, which have a number average molecular weight of 3,000 to 10,000, as subject resins and end-capped blocked polyisocyanate and melamine resin as curing agents were used, and a silica filter, epoxy silane as a silane coupling agent and the subject resins were dissolved in an organic solvent, propylene glycol methyl ether. Afterward, as described in Table 1, Zn powder was blended with the above-described mixture with variation in average diameter, shape, and content of the Zn powder. The content was defined as a volume ratio (volume %) taken up in a dried coating film. The mixing was performed by a high-speed stirring method using an impeller, a mechanical grinding method using a bead mill, and a combination thereof.

The metal-resin solution prepared as described above was coated on a galvanized steel sheet treated with alkaline cleaning or chromium-free pre-treatment to have an attached amount of 100 to 1,000 mg/m² after cleaning to a suitable film thickness according to the average diameter of the metal powder and dried, thereby forming a pre-coated steel sheet. Afterwards, welding property, workability and corrosion resistance of the pre-coated steel sheet were evaluated.

Welding property was evaluated by measuring the lifespan of an electrode using an AC pneumatic point welder in which a Cu-Cr alloy RWMA class II welding electrode is installed. Measurement conditions were set as follows: a welding force of 1.8 kN, a weld time of 6 cycles, a squeeze time of 24 cycles and a hold time of 12 cycles. A welding current and an applied voltage were adjusted appropriately after a weldable current range was measured, and the lifespan of the electrode was defined by measuring a maximum number of welding points at which an average diameter of a nugget to be welded became 4 times the square root of the thickness of the steel sheet, that is, more than 4 x (thickness of steel sheet)^{1/2}, and the criteria of the evaluation are as follows.

⊚: when the number of continuous welding points was more than 800

o: when the number of continuous welding points was 600 to 800

Δ: when the number of continuous welding points was 300 to 500

×: when the number of continuous welding points was 0 to 300

Workability was evaluated by measuring a peel area ratio of the metal powder and the resin after a blank was formed from the coated steel sheet to be a circular plane having a diameter of 96 mm and processed in a cup shape having a welding force of 0.5 ton, a diameter of 50 mm and a height of 30 mm, and a transparent 3M™ tape attached to the side of the cup was detached. Criteria of the evaluation for workability are as follows:

⊚: when the tape was peeled less than 5% based on the tape area

o: when the tape was peeled 5 to 10% based on the tape area

Δ: when the tape was peeled 10 to 20% based on the tape area

×: when the tape was peeled more than 20% based on the tape area

Corrosion resistance was evaluated by measuring time to generate red corrosion at the side of a specimen processed in a cup shape by the above-mentioned processing method using a salt spray tester (SST) which sprayed 35 °C of 5% salt water. Criteria of the evaluation for corrosion resistance are as follows.

⊚: Red corrosion was generated at more than 480 hours.

o: Red corrosion was generated in a range of 360 to 480 hours.

Δ: Red corrosion was generated in a range of 240 to 360 hours.

×: Red corrosion was generated at less than 240 hours.

**Table 1**

| | Metal Powder | | | Film Thickness (µm) | Metal Content (v/v%) | Quality Characteristics | | | Total |
|---|---|---|---|---|---|---|---|---|---|
| | Component | Average Diameter (µm) | | | | Welding properties | Workability | Corrosion Resistance | |
| | | Long Axis | Short Axis | | | | | | |
| Zn-1 | Zn | 1.2 | 1.2 | 2 | 1 | × | ⊚ | O | × |
| Zn-2 | | | | | 5 | O | O | O | O |
| Zn-3 | | | | | 15 | O | Δ | O | O |
| Zn-4 | | | | | 35 | O | × | × | × |
| Zn-5 | | | | 5 | 1 | × | ⊚ | ⊚ | × |
| Zn-6 | | | | | 5 | × | ⊚ | ⊚ | × |
| Zn-7 | | | | | 15 | Δ | Δ | O | × |
| Zn-8 | | | | | 35 | Δ | × | Δ | × |
| Zn-9 | | 4.6 | 4.6 | 2 | 1 | × | O | O | × |
| Zn-10 | | | | | 5 | O | O | O | O |
| Zn-11 | | | | | 15 | O | O | Δ | O |
| Zn-12 | | | | | 35 | ⊚ | × | × | × |
| Zn-13 | | | | 5 | 1 | × | ⊚ | ⊚ | × |
| Zn-14 | | | | | 5 | O | ⊚ | ⊚ | O |
| Zn-15 | | | | | 15 | O | O | Δ | O |
| Zn-16 | | | | | 35 | ⊚ | × | × | × |
| Zn-17 | | 15.2 | 0.9 | 2 | 1 | × | O | O | × |
| Zn-18 | | | | | 5 | × | O | Δ | × |
| Zn-19 | | | | | 15 | O | Δ | × | × |
| Zn-20 | | | | | 35 | ⊚ | × | × | × |
| Zn-21 | | | | 5 | 1 | × | ⊚ | ⊚ | × |
| Zn-22 | | | | | 5 | × | O | O | × |
| Zn-23 | | | | | 15 | × | Δ | O | × |
| Zn-24 | | | | | 35 | Δ | × | × | × |

<Example 2>

The resin compound described in Example 1 was blended with Al powder. Here, the Al powder varied in average diameter, shape and content as shown in Table 2.

The content was defined as a volume ratio (volume %) taken up in a dried film. Mixing was performed by a high-speed stirring method using an impeller, a mechanical grinding method using a bead mill, or a combination thereof.

**Table 2**

| | Metal Powder | | | Film Thickness (µm) | Metal Content (v/v%) | Quality Characteristics | | | Total |
|---|---|---|---|---|---|---|---|---|---|
| | Component | Average Diameter (µm) | | | | Welding Properties | Workability | Corrosion Resistance | |
| | | Long Axis | Short Axis | | | | | | |
| Al-1 | Al | 5.7 | 5.7 | 2 | 1 | × | ⊚ | ⊚ | × |
| Al-2 | | | | | 5 | ⊚ | ⊚ | ⊚ | O |
| Al-3 | | | | | 15 | ⊚ | O | O | O |
| Al-4 | | | | | 35 | ⊚ | × | × | × |
| Al-5 | | | | 5 | 1 | × | ⊚ | ⊚ | × |
| Al-6 | | | | | 5 | O | ⊚ | O | O |
| Al-7 | | | | | 15 | ⊚ | O | O | O |
| Al-8 | | | | | 35 | ⊚ | × | × | × |
| Al-9 | | 6.3 | 0.4 | 2 | 1 | × | ⊚ | O | × |
| Al-10 | | | | | 5 | × | O | O | × |
| Al-11 | | | | | 15 | × | × | Δ | × |
| Al-12 | | | | | 35 | Δ | × | × | × |
| Al-13 | | | | 5 | 1 | × | ⊚ | ⊚ | × |
| Al-14 | | | | | 5 | × | O | ⊚ | × |
| Al-15 | | | | | 15 | × | × | O | × |
| Al-16 | | | | | 35 | × | × | Δ | × |
| Al-17 | | 13.3 | 0.8 | 2 | 1 | × | × | ⊚ | × |
| Al-18 | | | | | 5 | × | ⊚ | ⊚ | × |
| Al-19 | | | | | 15 | Δ | Δ | O | × |
| Al-20 | | | | | 35 | O | × | O | × |
| Al-21 | | | | 5 | 1 | × | ⊚ | ⊚ | × |
| Al-22 | | | | | 5 | × | O | ⊚ | × |
| Al-23 | | | | | 15 | × | × | ⊚ | × |
| Al-24 | | | | | 35 | Δ | × | O | × |

<Example 3>

A polyester resin having a number average molecular weight of 5,000 to 30,000 as a subject resin, and polyisocyanate and a melamine resin as curing agent were used, and a silica filter, epoxy silane as a silane coupling agent and the subject resin were dissolved in an organic solvent, propylene glycol methyl ether. Afterwards, as shown in Tables 3 and 4, Ni powder was blended with the above-described mixture with variation in average diameter, shape, and content of the Ni powder. The content was defined as a volume ratio (volume %) taken up in a dried film. Mixing was performed by a high-speed stirring method using an impeller, a mechanical grinding method using a bead mill, and a combination thereof.

**Table 3**

| | Metal Powder | | | Film Thickness (µm) | Metal Content (v/v%) | Quality Characteristics | | | Total |
|---|---|---|---|---|---|---|---|---|---|
| | Component | Average Diameter (µm) | | | | Welding Properties | Workability | Corrosion Resistance | |
| | | Long Axis | Short Axis | | | | | | |
| Ni-1 | Ni | 1.4 | 1.4 | 2 | 1 | × | O | O | × |
| Ni-2 | | | | | 5 | O | O | O | O |
| Ni-3 | | | | | 15 | ⊚ | O | Δ | O |
| Ni-4 | | | | | 35 | ⊚ | × | × | × |
| Ni-5 | | | | 5 | 1 | × | ⊚ | ⊚ | × |
| Ni-6 | | | | | 5 | × | O | O | × |
| Ni-7 | | | | | 15 | Δ | Δ | Δ | × |
| Ni-8 | | | | | 35 | O | × | × | × |
| Ni-9 | | 3.2 | 3.2 | 2 | 1 | × | O | O | × |
| Ni-10 | | | | | 5 | ⊚ | O | O | O |
| Ni-11 | | | | | 15 | ⊚ | O | O | O |
| Ni-12 | | | | | 35 | ⊚ | × | × | × |
| Ni-13 | | | | 5 | 1 | × | ⊚ | ⊚ | × |
| Ni-14 | | | | | 5 | O | ⊚ | ⊚ | O |
| Ni-15 | | | | | 15 | ⊚ | O | O | O |
| Ni-16 | | | | | 35 | ⊚ | × | × | × |
| Ni-17 | | 4.5 | 2.3 | 2 | 1 | × | O | O | × |
| Ni-18 | | | | | 5 | O | ⊚ | ⊚ | O |
| Ni-19 | | | | | 15 | ⊚ | O | ⊚ | O |
| Ni-20 | | | | | 35 | ⊚ | × | × | × |
| Ni-21 | | | | 5 | 1 | × | ⊚ | ⊚ | × |
| Ni-22 | | | | | 5 | O | ⊚ | ⊚ | O |
| Ni-23 | | | | | 15 | ⊚ | O | ⊚ | O |
| Ni-24 | | | | | 35 | ⊚ | × | × | × |

**Table 4**

| | Metal Powder | | | Film Thickness (µm) | Metal Content (v/v%) | Quality Characteristics | | | Total |
|---|---|---|---|---|---|---|---|---|---|
| | Component | Average Diameter (µm) | | | | Welding Properties | Workability | Corrosion Resistance | |
| | | Long Axis | Short Axis | | | | | | |
| Ni-25 | Ni | 12.8 | 0.9 | 2 | 1 | × | ⊚ | ⊚ | × |
| Ni-26 | | | | | 5 | O | ⊚ | O | × |
| Ni-27 | | | | | 15 | ⊚ | O | × | × |
| Ni-28 | | | | | 35 | ⊚ | × | × | × |
| Ni-29 | | | | 5 | 1 | × | ⊚ | ⊚ | × |
| Ni-30 | | | | | 5 | × | ⊚ | ⊚ | × |
| Ni-31 | | | | | 15 | × | O | O | × |
| Ni-32 | | | | | 35 | O | × | × | × |
| Ni-33 | | 8.7 | 0.8 | 2 | 1 | × | O | ⊚ | × |
| Ni-34 | | | | | 5 | × | × | O | × |
| Ni-35 | | | | | 15 | Δ | × | × | × |
| Ni-36 | | | | | 35 | O | × | × | × |
| Ni-37 | | | | 5 | 1 | × | ⊚ | ⊚ | × |
| Ni-38 | | | | | 5 | × | ⊚ | ⊚ | × |
| Ni-39 | | | | | 15 | ⊚ | Δ | O | × |
| Ni-40 | | | | | 35 | Δ | × | × | × |

When a metal resin composition of the present invention is coated on any one of a cold-rolled steel sheet, a hot-rolled steel sheet, a galvanized steel sheet, a Zn-alloy plated steel sheet, an Al plated steel sheet, an Al alloy plated steel sheet, and a stainless steel sheet which are pre-treated with any one of pre-treatment with chromate or a chromium-free coating film, treatment of an SiOx layer and pre-treatment with phosphate to have an attached amount of 10 to 2,000 mg/m², painting an exterior of a part for an automobile, electric appliance or construction material which requires excellent welding properties, workability and corrosion resistance after molding and welding is omitted, or minimum sealing or painting is performed only to a welded or cut part. Thus, the resulting plate is suitably used as a part for an automobile, electric appliance or construction material.

While the invention has been shown and described with reference to certain exemplary embodiments thereof, it will be understood by those skilled in the art that various changes in form and details may be made therein without departing from the scope of the invention as defined by the appended claims.

## Claims

1. A resin metal composition for coating a pre-coated steel sheet, comprising:
a subject resin;
a curing agent; and
powder of at least one metal selected from the group consisting of Ni, Co, Mn, Fe, Ti, Cu, Al, Zn, Sn and Fe₂P, or an alloy thereof,
wherein the average short-axis diameter (Φ) of the single metal powder or alloy powder satisfies t/3≤Φ≤3t (where t is a thickness of a dried coating film formed by coating a resin metal composition for coating the coating film).

2. The composition of Claim 1, wherein the Φ satisfies t/2≤Φ≤2t.

3. The composition of Claim 1, wherein the single metal powder or alloy powder has a length ratio of a short axis to a long axis of 1:1 to 10.

4. The composition of Claim 1, wherein the single metal powder or alloy powder has an average diameter of 0.1 to 100 µm.

5. The composition of Claim 1, wherein the single metal powder or alloy powder is contained at a volume of 2 to 30 v/v% of a total volume of the dried coating film.

6. The composition of Claim 1, wherein the single metal powder or alloy powder is pre-treated with a silane coupling agent, and then mixed with a non-metal resin composition, or
dispersed in a non-metal resin composition containing 0.1 to 10 parts by weight of a silane coupling agent based on 100 parts by weight of the subject resin.

7. A pre-coated steel sheet to which a resin metal composition of any one of Claims 1 to 6 is applied.

8. The steel sheet of Claim 7, wherein the pre-coated steel sheet is pre-treated by one method selected from the group consisting of chromate treatment, chromium-free coating film treatment, SiOx layer treatment and phosphate treatment to have an attached amount of 10 to 2,000 mg/m².

9. The steel sheet of Claim 7, wherein the coating film dried after applying the resin metal composition for coating the pre-coated steel sheet, has a thickness of 1 to 20 µm, which includes the thickness of the pre-treated layer.
